Europäisches Patentamt

European Patent Office

Office européen des brevets

(11) Numéro de publication: **0 128 868**
**B1**

# (12) FASCICULE DE BREVET EUROPEEN

(45) Date de publication du fascicule du brevet:
**01.04.87**

(21) Numéro de dépôt: **84810272.9**

(22) Date de dépôt: **05.06.84**

(51) Int. Cl.⁴: **G 03 B 23/04,** B 65 G 59/06

---

**(54)** Distributeur automatique pour pièces rigides plates.

---

(30) Priorité: **13.06.83 CH 3231/83**

(43) Date de publication de la demande:
**19.12.84 Bulletin 84/51**

(45) Mention de la délivrance du brevet:
**01.04.87 Bulletin 87/14**

(84) Etats contractants désignés:
**DE FR GB SE**

(56) Documents cités:
**EP - A - 0 013 976**
**GB - A - 1 296 572**
**GB - A - 1 367 059**
**NL - A - 6 611 765**
**US - A - 3 997 067**

(73) Titulaire: **Rochat, Charles-Louis, Chalet Mont d'Or,
CH-1342 Le Pont (CH)**

(72) Inventeur: **Rochat, Charles-Louis, Chalet Mont d'Or,
CH-1342 Le Pont (CH)**

(74) Mandataire: **Ardin, Pierre et al, PIERRE ARDIN &
CIE 22, rue du Mont-Blanc, CH-1211 Genève 1 (CH)**

---

## Description

La présente invention concerne un distributeur automatique de pièces rigides et plates, notamment de diapositives, comprenant un chargeur constitué par un canal sensiblement vertical, dans lequel les pièces plates sont juxtaposées pour former une pile, et un mécanisme de séparation destiné à séparer à tour de rôle la pièce la plus basse de la pile.

On connaît déjà de tels distributeurs qui sont par exemple utilisés dans des projecteurs de diapositives à chargeur vertical. Des exemples de tels projecteurs sont décrits dans les brevets US 4 274 719 ou 3 782 816. Ces projecteurs possèdent un mécanisme de séparation comportant un organe destiné à pousser la diapositive la plus basse de la pile par la tranche pour l'isoler des autres diapositives de la pile. Un tel mécanisme comporte cependant plusieurs inconvénients. Si les diapositives sont minces, le mécanisme risque de déplacer deux diapositives à la fois, d'où l'obligation d'un dispositif de retenue compliqué et peu fiable. En outre, tout le poids de la pile des diapositives repose sur la diapositive la plus basse lorsque celle-ci déplacée. Comme les diapositives frottent les unes sur les autres lors de la séparation, elles risquent de se rayer mutuellement. Si les diapositives présentent des aspérités, provenant par exemple d'étiquettes collantes ou de déformations, elles ont tendance à bloquer le mécanisme de séparation.

Par le brevet US 3 997 067, on connaît un appareil destiné à transporter des pièces de circuit intégré vers un poste de-traitement comportant un distributeur de pièces de circuits intégrés présentant un mécanisme de séparation. Ce dernier comprend des organes de support escamotables de la pièce la plus basse d'une pile, sur laquelle reposent les autres pièces, et des organes de serrage destinés à retenir la pièce superposée à la pièce la plus basse au moment où cette dernière est libérée. Dans le cas où les pièces présentent des épaisseurs variables, comme cela est le cas pour les diapositives, il arrive que ce n'est pas la pièce immédiatement superposée qui est retenue, mais une pièce se trouvant plus haut dans la pile, ce qui a comme conséquence que deux, voire trois, pièces sont libérées simultanément. Un autre inconvénient réside dans le fait que la pièce la plus basse n'est pas maintenue par les organes de serrage au moment où les organes de support sont escamotés. Cette pièce peut de ce fait se mettre en travers et tomber obliquement dans le canal, ce qui gêne sa reprise ultérieure dans un appareil de projection par exemple.

L'invention a pour but de remédier à ces inconvénients. L'invention, telle qu'elle est caractérisée dans les revendications, résout le problème consistant à créer un distributeur permettant la séparation sure d'une seule pièce à la fois, même si ces pièces présentent des épaisseurs variables et assurant une chute horizontale de la pièce libérée.

Bien que le distributeur est particulièrement adapté à la séparation de diapositives dans un projecteur, de nombreuses autres applications peuvent être envisagées, tel que par exemple l'utilisation dans des distributeurs de pièces de monnaie, dans des installations automatiques de chaînes de montage, dans des installations de constructions par la pose d'éléments de constructions, etc.

Le dessin annexé représente, schématiquement et à titre d'exemple, une forme d'exécution du distributeur automatique objet de l'invention.

La figure 1 est une vue en coupe latérale du distributeur automatique.

La figure 2 représente une coupe suivant B-B' de la figure 1.

La figure 3 est une vue en perspective d'une des cames.

La figure 4 illustre schématiquement le fonctionnement du distributeur.

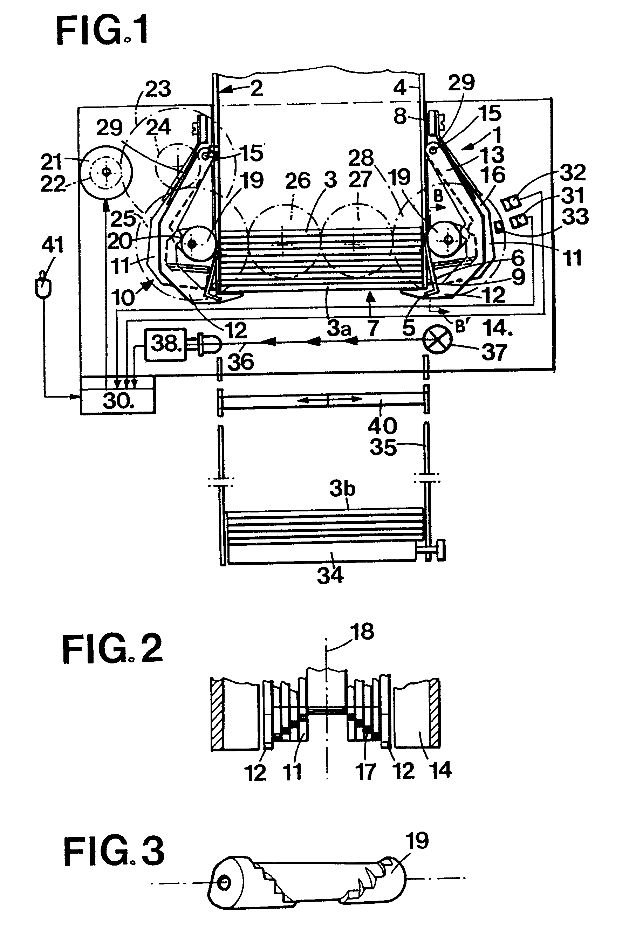

Le distributeur 1 illustré à la figure 1 comporte un chargeur 2 constitué par un canal vertical dans lequel les diapositives 3 sont juxtaposées formant une pile. Ce chargeur 2 est constitué par un boîtier 4 en plastique transparent long de 210 mm muni d'un couvercle à glissière non illustré. Il possède à sa base quatre crochets 5 portés par des bras 6 flexibles solidaires du boîtier 4. Ces crochets 5 empêchent les diapositives de s'échapper par l'ouverture 7 prévue à la base du boîtier 4. Le chargeur s'enfile verticalement dan un logement 8 prévu dans le bâti 14 du distributeur 1. Les bras 6 flexibles de crochets 5 coopèrent avec des portions en saillie 9 du logement 8 pour écarter les chrochets 5 latéralement de l'ouverture 7 prévue dans le boîtier 4, lorsque le chargeur 2 est mis en place dans le distributeur.

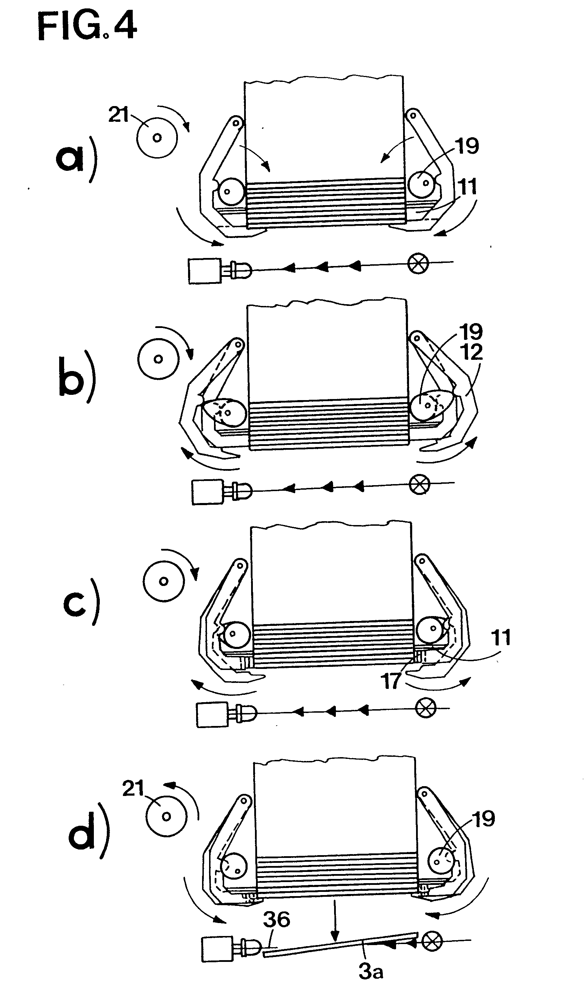

Ce dernier comprend un mécanisme de séparation 10 destiné à isoler la diapositive la plus basse 3a du reste de la pile. Cette dernière est alors transportée par un chariot 40 vers la position de projection. Le mécanisme de séparation 10 présente des organes de support destinés à porter la pile des diapositives 3 lorsque les crochets 5 du boîtier 4 sont écartés et des organes de serrage comportant deux séries ou rangées de neuf doigts 11 disposées sur deux côtés opposés du logement 8. Les organes de support sont constitués par quatre griffes 12 placées de chaque côté des deux rangées de doigts 11. Ces griffes 12 possèdent des bras 13 montés par une de leurs extrémités sur deux arbres 15 solidaires du bâti 14. Les quatre griffes 12 sont susceptibles d'être pivotées simultanément d'une première position dans laquelle elles sont engagées sous la diapositive la plus basse 3a, vers une seconde position dans laquelle elles libèrent entièrement l'ouverture 7 (voir figure 4b).

Les doigts 11 comportent également des bras 16 articulés sur les arbres 15 et, à leur extrémité inférieure en regard des diapositives, des portions 17 à coefficient de friction élevé, par exemple en élastomère, destinées à coopérer avec la tranche des diapositives inférieures. Tel qu'illustré à la figure 2, ces portions 17 sont situées à des distances croissantes du bord inférieur des doigts 11 et arrangées de façon symétrique par rapport à la ligne médiane 18.

Les griffes 12 et les doigts 11 sont sollicités par deux séries de ressorts à lames 29 vers deux cames cylindriques 19 à section variable destinées à commander les mouvements de pivotement des griffes 12 et des doigts 11 autour de l'arbre 15.

La figure 3 représente une telle came qui comporte un pourtour subdivisé en onze tranches coopérant avec des portions en saillie 20 des neuf doigts 11 et des deux griffes 12 disposés de chaque côté du logement 8. Un moteur 21 entraîne les deux cames 20 par l'intermédiaire des engrenages 21 à 28. Ce moteur 21 est commandé par un unité de commande électronique 30.

Le distributeur comprend en outre deux capteurs magnétiques 31, 32 fixés sur le bâti 14 en regard de la roue dentée 28 portant un aimant permanent 33. Les deux capteurs magnétiques 31, 32 sont reliés à l'unité de commande 30 et permettent de définir d'une part une position de départ dans laquelle les griffes 12 supportent la pile de diapositives et dans laquelle les doigts 11 sont écartés des diapositives 3 et d'autre part une position dans laquelle l'ensemble des doigts et griffes est écarté. Lorsque le distributeur se trouve dans cette position, l'ouverture 7 est entièrement libre et un mécanisme élévateur 34 permet de remonter dans le chargeur 2 les diapositives projetées 3b qui sont empilées dans un réservoir 35 situé endessous du distributeur. Une description détaillée du mécanisme élévateur 34 est présentée dans le brevet US 4 274 719.

Le distributeur 1 possède en outre un dispositif opto-électronique 36 comportant une lampe 37 et un détecteur 38. Ce dispositif 36 est relié a l'unité de commande 30 et fournit à cette dernière un signal lorsqu'une diapositive a été libérée par le mécanisme de séparation 10 et traverse l'espace entre la lampe 37 et le détecteur 38. La diapositive 3a est alors recueuillie par le chariot 40 qui la transporte vers la position de projection et la ramène après la projection vers le réservoir 35, où les diapositives projetées sont déposées, tel que décrit dans le brevet US 4 274 719.

En référence aux figures 1 et 4a–d, le distributeur automatique fonctionne de la façon suivante.

A l'arrêt, lorsque le chargeur 2 se trouve dans le logement 8, la pile de diapositives repose sur les griffes 12 alors que les doigts 11 sont retirés en coopérant avec les cames 19 (voir fig. 1). Dès qu'un signal d'avance de diapositive est donné par exemple par l'intermédiaire de la commande 41, le moteur 21 entraîne les cames 19 qui laissent appuyer l'ensemble des doigts 11 contre la tranche des diapositives les plus basses. La pile des diapositives est ainsi solidement maintenue (voir fig. 4a).

Les cames continuant de tourner retirent les griffes 12 (voir fig. 4b) puis progressivement les doigts 11 en commençant par les doigts ayant leur portion de retenue 17 le plus près du bord inférieur du canal (voir fig. 4c).

Dès que la diapositive la plus basse 3a tombe, elle actionne le dispositif opto-électronique 36, qui fournit à l'unité de commande 30 un signal d'inversion du sens du moteur 21. Les cames 19 sont alors entraînées en sens inverse (fig. 4d). Les doigts 11 entrent de nouveau en contact avec les diapositives et les griffes 12 sont placées sous la pile de diapositives. Les doigts 11 sont ensuite simultanément écartés du bord des diapositives et la pile vient s'appuyer sur les griffes 12. L'aimant 33 se trouve alors en face du capteur magnétique 31, qui fournit un signal à l'unité de commande pour arrêter le moteur 21. Le distributeur est prêt pour un nouveau cycle (voir fig. 1).

Lorsque le chargeur 2 est vide et la commande 41 est actionnée, les cames 19 écartent les griffes 12 et tous les doigts 11. Quand l'aimant 33 est en regard du capteur 32, le moteur 21 est arrêté et la pile de diapositives 3b peut être remontée dans le chargeur 2 par le mécanisme élévateur 34 décrit en détail dans le brevet US 4 274 719.

Grâce à l'interaction des griffes 12 et des doigts 11 et grâce à l'écartement progressif des doigts 11, le distributeur automatique permet d'isoler de façon sure et douce la diapositive la plus basse d'une pile comportant des diapositives d'épaisseurs fort différentes, tel que cela est le cas pour une pile composée d'un mélange de diapositives en carton (épaisseur environ 1,2 mm), en plastique (épaisseur environ 2 mm) et en verre (épaisseur environ 3 mm).

Le distributeur décrit, peut être facilement adapté pour permettre de rechercher les diapositives se trouvant das une portion déterminée de la pile. En effet, il suffit d'arrêter dans une position intermédiaire le mouvement de remontée de la pile du réservoir 35 vers le chargeur 2 et de commander le serrage des doigts 11 pour retenir la partie supérieure de la pile. On fait alors redescendre l'élévateur et il est possible de passer à la projection des diapositives contenues dans la partie supérieure de la pile.

**Revendications**

1. Distributeur automatique de pièces rigides et plates, notamment de diapositives, comprenant un chargeur (2) constitué par un canal sensiblement vertical, dans lequel les pièces plates (3) sont juxtaposées pour former une pile, un mécanisme de séparation (10) destiné à séparer à tour de rôle la pièce la plus basse (3a) de la pile, ce mécanisme de séparation comprenant au moins un organe de support (12) de la pièce inférieure de la pile, sur laquelle reposent les autres pièces, cet organe de support étant escamotable, ce mécanisme de séparation comprenant encore au moins un organe de serrage (11) des pièces à la base du canal, caractérisé en ce que cet organe de serrage s'étend sur une hauteur correspondant au moins à celle de deux pièces juxtaposées, cet organe de serrage (11) étant commandé par un mécanisme (19) provocant son desserrage progressif à partir du bas du canal vers le haut lorsque l'organe de support (12) est escamoté.

2. Distributeur selon la revendication 1, caractérisé en ce qu'il comprend un détecteur (38) sensible à la séparation de la pièce inférieure (3a) de la pile et commandant la remise en position des organes de support (12), puis un desserrage complet des organes de serrage (11), suivi d'un nouveau serrage.

3. Distributeur selon la revendication 1, caractérisé en ce que les organes de support (12) sont constitués par au moins deux griffes de retenue escamotables, ces griffes étant susceptibles d'être amenées en saillie dans la section du canal, sur deux positions opposées dans ce canal.

4. Distributeur selon la revendication 1, caractérisé en ce que les organes de serrage (11) sont constitués par plusieurs doigts comportant des portions (17) prenant appui élastiquement contre le bord des pièces (3), ces portions étant décalées dans le sens de la hauteur du canal, les doigts étant commandés pour être écartés successivement des pièces contenues dans le canal.

5. Distributeur selon la revendication 4, caractérisé en ce que les doigts sont arrangés en rangées disposées sur des côtés opposés du canal et en ce que lesdites portions décalées (17) dans les sens de la hauteur sont disposées de façon symétrique par rapport à une ligne médiane (18) des rangées.

6. Distributeur selon les revendications 3 à 5, caractérisé en ce que les griffes de retenue (12) sont disposées aux extrémités latérales des rangées de doigts (11).

7. Distributeur selon la revendication 1, caractérisé en ce qu'il comporte au moins une came (19) entraînée par un moteur (21) destinée à contrôler les organes de support escamotables (12) et les organes de serrage (11).

8. Distributeur selon les revendications 3 à 7, caractérisé en ce que le mécanisme de séparation comporte, associé à chaque doigt et à chaque griffe, un ressort (29) sollicitant le doigt (11), respectivement la griffe (12), en direction desdites pièces (3), les cames (19) coopérant avec une portion des doigts, respectivement des griffes, pour écarter les doigts, respectivement les griffes, des pièces contre l'action des ressorts.

9. Distributeur selon la revendicaton 8, caractérisé en ce que les cames (19) sont conformées de façon à déplacer les doigts pour coopérer avec le bord des pièces avant que les griffes soient écartées des pièces et de façon à écarter progressivement les doigts (11) en commençant par les doigts comportant les portions de retenue (17) les plus rapprochées du bord inférieur du canal.

10. Distributeur selon les revendications 2 et 9, comportant une unité de commande (30) commandant le moteur (21), caractérisé en ce que le détecteur (38) est relié à l'unité de commande pour transmettre, lors de la séparation d'une pièce, un signal d'inversion du sens de rotation du moteur de façon à commander la remise en position des griffes (12) et le desserrage des doigts (11).

**Patentansprüche**

1. Automatische Verteilvorrichtung für starre, flache Teile, insbesondere für Diapositive, die ein Magazin (21), bestehend aus einem merklich senkrechten Kanal, in dem die flachen Teile (3) übereinander liegen und einen Stapel bilden und einen Trennmechanismus (10) besitzen, der dazu dient, das jeweils unterste Teil (3a) des Stapels abzutrennen, wobei der Trennmechanismus mindestens ein Halteorgan (12) des untersten Teils des Stapels umfasst, auf dem die anderen Teile ruhen, wobei dieses Halteorgan zurückziehbar ist, und wobei dieser Trennmechanismus weiterhin mindestens ein Klemmorgan (11) für die Teile an der Basis des Kanals aufweist, dadurch gekennzeichnet, dass dieses Klemmorgan sich über eine Höhe erstreckt, die mindestens derjenigen von zwei aufeinanderliegenden Teilen entspricht, wobei dieses Klemmorgan (11) durch einen Mechanismus (19) gesteuert wird, der die allmähliche Lockerung des Klemmorgans vom unteren Teil des Kanals aus nach oben bewirkt, wenn das Halteorgan (12) zurückgezogen ist.

2. Verteilvorrichtung nach Anspruch 1, dadurch gekennzeichnet, dass sie einen Detektor (38) umfasst, der die Abtrennung des untersten Teils (3a) des Stapels registriert und die Rückstellung der Halteorgane (12), die anschliessende vollständige Lockerung der Klemmorgane (11) und den nachfolgenden neuen Klemmvorgang steuert.

3. Verteilvorrichtung nach Anspruch 1, dadurch gekennzeichnet, dass die Halteorgane (12) durch mindestens zwei zurückziehbare Halte-Greifer gebildet werden, wobei diese Greifer im Abschnitt des Kanals, an zwei gegenüberliegenden Positionen als Vorsprünge ausgeführt werden können.

4. Verteilvorrichtung nach Anspruch 1, dadurch gekennzeichnet, dass die Klemmorgane (11) durch mehrere Finger gebildet werden, welche Elemente (17) zum elastischen Halten am Rand der Teile (3) aufweisen, wobei diese Elemente (17) im Sinne der Höhe des Kanals verschoben sind und die Finger so gesteuert werden, dass sie nacheinander von den im Kanal enthaltenen Teilen gespreizt werden.

5. Verteilvorrichtung nach Anspruch 4, dadurch gekennzeichnet, dass die Finger in an gegenüberliegenden Seiten des Kanals befindlichen Reihen eingeordnet sind und dass die genannten, im Sinne der Höhe verschobenen Elemente (17) symmetrisch in bezug auf eine Mittelline (18) der Reihen angeordnet sind.

6. Verteilvorrichtung nach den Ansprüchen 3 bis 5, dadurch gekennzeichnet, dass die Halte-Greifer (12) an den seitlichen Enden der Finger-Reihen (11) angeordnet sind.

7. Verteilvorrichtung nach Anspruch 1, dadurch gekennzeichnet, dass sie mindestens einen durch einen Motor (21) angetriebenen Nocken (19) umfasst, der dazu bestimmt ist, die zurückziehbaren Halteorgane (12) und die Klemmorgane (11) zu steuern.

8. Verteilvorrichtung nach den Ansprüchen 3 bis 7, dadurch gekennzeichnet, dass der Trennmechanismus für jeden Finger und jeden Greifer eine Feder (29) aufweist, welche den Finger (11) bzw. den Greifer (12) in Richtung der genannten Teile (3) drückt, wobei die Nocken (19) mit einem Teilstück der Finger bzw. der Greifer zusammenwirken, um die Finger bzw. die Greifer gegen die Federkraft von den Teilen wegzuspreizen.

9. Verteilvorrichtung nach Anspruch 8, dadurch gekennzeichnet, dass die Nocken (19) so ausgestaltet sind, dass sie die Lage der Finger verändern, um mit dem Rand der Teile zusammenzuwirken, bevor die Greifer von den Teilen gespreizt werden, und dass sie allmählich die Finger (11) spreizen, wobei dies anfangs bei den Fingern erfolgt, welche die am nächsten am unteren Rand des Kanals gelegenen Halteteile (17) aufweisen.

10. Verteilvorrichtung nach den Ansprüchen 2 und 9, umfassend eine Steuereinheit (30) für den Motor (12), dadurch gekennzeichnet, dass der Detektor (38) mit der Steuereinheit verbunden ist, um ein Signal zur Umkehr der Drehrichtung des Motors bei der Abtrennung eines Teiles zu übertragen, so dass die Rückstellung der Greifer (12) und die Lockerung der Finger (11) gesteuert werden.

## Claims

1. Automatic distributor for flat and rigid pieces, particularly slides, comprising a loader (2) consisting of a substantially vertical channel in which the flat pieces (3) are juxtaposed to form a stack, a separation mechanism (10) intended to separate in succession the lowest piece (3a) of the stack, this separation mechanism comprising at least one support element (12) for the bottom piece of the stack, on which the other pieces rest, this support element being retractable, this separation mechanism comprising also at least one element (11) locking the pieces at the base of the channel, characterized in that this locking element extends to a height corresponding at least to that of two juxtaposed pieces, this locking element (11) being controlled by a mechanism (19) that causes its gradual unlocking from the bottom of the channel upward when the support element is retracted.

2. Distributor according to claim 1, characterized in that it comprises a sensor (38) sensitive to the separation of the bottom piece (3a) of the stack and controlling the return to positon of the support elements (12), then a complete unlocking of the locking elements (11), followed by a new locking.

3. Distributor according to claim 1, characterized in that the support elements (12) consist of at least two retractable holding claws, these claws being able to be projected into the section of the channel, on two opposite directions of this channel.

4. Distributor according to claim 1, characterized in that the locking elements (11) consist of several pins comprising portions (17) that press elastically against the edge of the pieces (3), these portions being offset in the direction of the height of the channel, the pins being controlled to be separated successively from the pieces contained in the channel.

5. Distributor according to claim 4, characterized in that the pins are arranged in rows located on opposite sides of the channel and in that said portions (17) offset in the direction of the height are arranged symmetrically in relation to a center line (18) of the rows.

6. Distributor according to claims 3 to 5, characterized in that the holding claws (12) are located at the lateral ends of the rows of pins (11).

7. Distributor according to claim 1, characterized in that it comprises at least one cam (19) driven by a motor (21) intended to control the retractable support elements (12) and the locking elements (11).

8. Distributor according to claims 3 to 7, characterized in that the separation mechanism comprises, associated with each pin and with each claw, a spring (29) pulling the pin (11), or the claw (12), in the direction of said pieces (3), the cams (19) working with a portion of the pins, or of the claws, to separate the pins or the claws from the pieces against the action of the springs.

9. Distributor according to claim 8, characterized in that the cams (19) are shaped so as to move the pins to work with the edge of the pieces before the claws are separated from the pieces and so as to gradually separate the pins (11) beginning with the pins comprising the holding portions (17) closest to the bottom edge of the channel.

10. Distributor according to claims 2 and 9, comprising a control unit (30) controlling the motor (21), characterized in that the sensor (38) is connected to the control unit to transmit, during the separation of a piece, a signal for reversal of the direction of rotation of the motor to control the repositioning of the claws (12) and the unlocking of the pins (11).

# FIG.1

# FIG.2

# FIG.3

# FIG. 4